# EUROPEAN PATENT APPLICATION

(11) **EP 3 236 410 A1**
(43) Date of publication of application: **25.10.2017**
(21) Application number: 15869112.1
(22) Date of filing: 13.10.2015
(51) Int. Cl.: G06Q 50/12

(54) **METHOD, DEVICE AND APPARATUS FOR PROCESSING MENU DATA, AND NON-VOLATILE COMPUTER STORAGE MEDIUM**

(30) Priority: 18.12.2014 CN 201410797562
(71) Applicant: Baidu Online Network Technology (Beijing) Co., Ltd., Beijing 100085 (CN)
(72) Inventor: WEI, Chengdong, Beijing 100085 (CN); XU, Peng, Beijing 100085 (CN)
(74) Representative: dompatent von Kreisler Selting Werner - Partnerschaft von Patent- und Rechtsanwälten mbB
(86) International application number: PCT/CN2015/091833
(87) International publication number: WO 2016/095601

(57) **Abstract**

The invention provides a method, device, apparatus, and nonvolatile computer storage medium for menu data processing, so as to improve dish ordering efficiency. In the embodiments of the invention, through receiving the dining location identifier sent from a terminal wherein the dining location identifier is read by the terminal from an object tag in the dining location, and then obtaining corresponding menu data of the dining location identifier, it is possible to send the menu data to the terminal. Since the menu data in electronic form is used instead of the traditional printed menu, there is no longer the problem of limited number of menus; accordingly, it is possible to avoid the problem in the prior art that, due to shortage of menus, a client can not study a menu and order dishes until a menu is available to him, and thus it is possible to improve the efficiency of dish ordering.

## Description

This application claims the priority of the Chinese patent application filed on December 18, 2014, with the Application No. 201410797562.3, and titled as "Method and Apparatus for Menu Data Processing".

### TECHNICAL FIELD

The present invention relates to data processing technology, and more particularly to a method, device, apparatus, and nonvolatile computer storage medium for menu data processing.

### BACKGROUND

Currently, the common way for dish ordering in the catering industry is: after a customer enters a restaurant, a waiter handed the customer a printed menu for him to view and make orders, the customer's choice of dishes is recorded and generated into a dish order by the waiter. Subsequently, the waiter sends the dish order into the kitchen, the chefs prepare the dishes according to the dish order.

Nevertheless, due to the limited number of menus, in some cases, for example, when there are too many customers in the restaurant, some customers have to wait until menus are available to him, only after that can they view and make orders, which leads to reduced dish ordering efficiency.

### SUMMARY

A number of aspects of the present invention provide a method, device, apparatus, and nonvolatile computer storage medium for menu data processing, so as to improve dish ordering efficiency.

One aspect of the invention provides a menu data processing method, comprising:
receiving a dining location identifier sent from a terminal, the dining location identifier being read by the terminal from an object tag in a dining location;
obtaining corresponding menu data of the dining location identifier;
sending the menu data to the terminal.

As the aforementioned aspect and any possible implementation, an implementation is further provided, wherein the step of receiving a dining location identifier sent from a terminal comprises:
receiving the dining location identifier sent by the terminal according to a server identifier of a server, the server identifier of the server being read by the terminal from the object tag.

As the aforementioned aspect and any possible implementation, an implementation is further provided, wherein the server identifier of the server is IP address of the server, URL of the server, or URN of the server.

As the aforementioned aspect and any possible implementation, an implementation is further provided, wherein the method comprises, after the step of sending the menu data to the terminal, the following:
obtaining dish ordering instructions triggered by a user operating the menu data with the terminal;
generating dish ordering data of the terminal according to the dish ordering instructions; and
carrying out an association processing on the dining location identifier and the dish ordering data of the terminal.

As the aforementioned aspect and any possible implementation, an implementation is further provided, wherein the method comprises, after the step of receiving a dining location identifier sent from a terminal, the following:
obtaining corresponding dish ordering data of the dining location identifier from terminals other than the terminal; and
sending the dish ordering data from said terminals other than the terminal to the terminal.

As the aforementioned aspect and any possible implementation, an implementation is further provided, wherein the method, after the step of generating dish ordering data of the terminal according to the dish ordering instructions, further comprises:
generating a dish order of the dining location based on all dish ordering data corresponding to the dining location identifier, for payment operations.

As the aforementioned aspect and any possible implementation, an implementation is further provided, wherein the method further comprises:
the terminal performing network payment operation based on the dish order.

As the aforementioned aspect and any possible implementation, an implementation is further provided, wherein the object tag is a RFID tag, a NFC tag, or a barcode.

Another aspect of the invention provides a menu data processing device, comprising:
a receiving unit, used for receiving a dining location identifier sent by a terminal, the dining location identifier being read by the terminal from a object tag;
an obtaining unit, used for obtaining corresponding menu data of the dining location identifier;
a transmission unit, used for sending the menu data to the terminal.

As the aforementioned aspect and any possible implementation, an implementation is further provided, wherein the receiving unit is specifically used for:
receiving the dining location identifier sent by the terminal according to a server identifier of a server, the server identifier of the server being read by the terminal from the object tag.

As the aforementioned aspect and any possible implementation, an implementation is further provided, wherein the server identifier of the server is IP address of the server, URL of the server, or URN of the server.

As the aforementioned aspect and any possible implementation, an implementation is further provided, wherein the obtaining unit is further used for:
obtaining dish ordering instructions triggered by a user operating the menu data with the terminal;
generating dish ordering data of the terminal according to the dish ordering instructions; and
carrying out an association processing on the dining location identifier and the dish ordering data of the terminal.

As the aforementioned aspect and any possible implementation, an implementation is further provided, wherein
the obtaining unit is further used for:
obtaining corresponding dish ordering data of the dining location identifier from terminals other than the terminal; and
the transmission unit is further used for:
   sending the dish ordering data from said terminals other than the terminal to the terminal.

As the aforementioned aspect and any possible implementation, an implementation is further provided, wherein the obtaining unit is further used for:
generating a dish order of the dining location based on all dish ordering data corresponding to the dining location identifier, for payment operations.

As the aforementioned aspect and any possible implementation, an implementation is further provided, wherein the payment operations include network payment operations.

As the aforementioned aspect and any possible implementation, an implementation is further provided, wherein the object tag is a RFID tag, a NFC tag, or a barcode.

Another aspect of the invention provides an apparatus, comprising:
one or more processors;
a memory;
one or more programs, which are stored in the memory, and execute the following when executed by the one or more processors:
   receiving a dining location identifier sent from a terminal, the dining location identifier being read by the terminal from an object tag in a dining location;
   obtaining corresponding menu data of the dining location identifier;
   sending the menu data to the terminal.

Another aspect of the invention provides a nonvolatile computer storage medium, stored with one or more programs, which, when executed by an apparatus, makes the apparatus to execute the following:
receiving a dining location identifier sent from a terminal, the dining location identifier being read by the terminal from an object tag in a dining location;
obtaining corresponding menu data of the dining location identifier;
sending the menu data to the terminal.

From the above technical solutions, in the embodiments of the invention, through receiving the dining location identifier sent from a terminal wherein the dining location identifier is read by the terminal from an object tag in the dining location, and then obtaining corresponding menu data of the dining location identifier, it is possible to send the menu data to the terminal. Since the menu data in electronic form is used instead of the traditional printed menu, there is no longer the problem of limited number of menus; accordingly, it is possible to avoid the problem in the prior art that, due to shortage of menus, a client can not study a menu and order dishes until a menu is available to him, and thus it is possible to improve the efficiency of dish ordering.

In addition, with the technical solution provided by the invention, after the customer uses the terminal he is using to read the dining location identifier from the object tag of the dining location and sends it to the server, it is possible to obtain corresponding menu data of the dining location identifier, there is no need of specific terminal or installing of a specific application, which increases the efficiency of dish ordering.

In addition, the menu data in electronic form is used instead of a traditional printout, it is therefore possible to do dish ordering based on the menu data, which makes it unnecessary for a waiter to generate a customer's selection of dishes into a dish order and send it to the kitchen, and thus effectively improves the efficiency of dish ordering.

In addition, because it is possible to generate the dish order of the dining location based on the dish ordering data corresponding to the dining location identifier, for payment operations, and it is particularly possible to perform network payment operation with the terminal, customers need not go to the cashier of the dining location, which can effectively improve the efficiency of dish ordering.

In addition, because it is possible to send the dish ordering data from terminals other than the terminal, corresponding to the dining location identifier, to the terminal, the terminal can carry out dish ordering along with said terminals other than the terminal, it is therefore possible to support the situation of multiple customers ordering at the same time.

### BRIEF DESCRIPTION OF DRAWINGS

In order to more clearly illustrate the technical solutions in the embodiments of the present invention, the drawings used for description of the embodiments or prior art will be briefly described; as is obvious, the drawings described below refer to some embodiments of the invention, those of ordinary skills can, without creative efforts, also obtain other drawings based on these drawings.
Fig. 1 is a schematic flow diagram of the menu data processing method according to one embodiment of the invention;
Fig. 2 is a schematic structure diagram of the menu data processing device according to another embodiment of the invention.

### DETAILED DESCRIPTION

For clearer description of the object, technical solutions, and advantages of the embodiments of the invention, the technical solutions of the embodiments of the invention will be clearly and fully described below in conjunction with the drawings for the embodiments of the present invention. It is clear that the described embodiments are only a portion, not all, of the embodiments of the present invention. All other embodiments, made by one of ordinary skills in the art without creative labor based on the embodiments of the present invention, are within the protected scope of the present invention.

It should be noted that the terminals involved in the embodiments of the present may include, yet not limited to, cell phones, personal digital assistants (PDA), wireless handheld devices, tablet computers, personal computers, MP3 players, MP4 players, wearable devices (for example, smart glasses, smart watches, smart bracelet, etc.), etc.

In addition, the term "and/or" merely describes associated relationship among associated objects, it represents that three types of relationship may exist. For example, A and/or B can indicate the following three situations: presence of A alone, presence of both A and B, and presence of B alone. In addition, the character "/" herein generally represents that the associated objects before and after the character has an "OR" relationship.

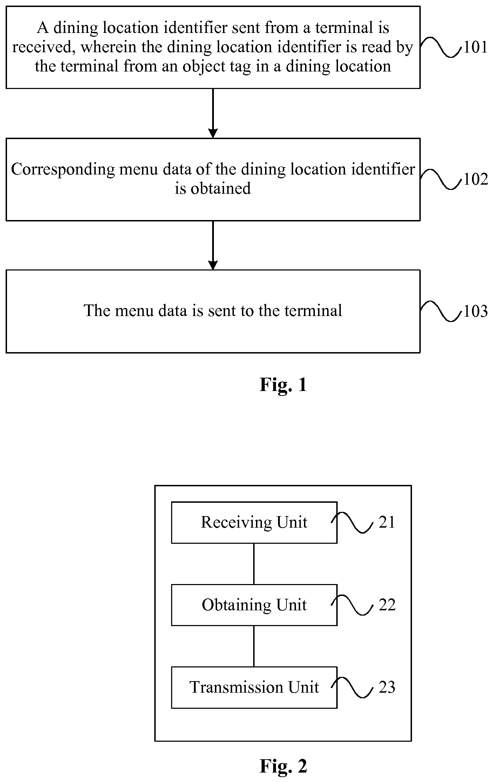

Fig. 1 is a schematic flow diagram of the menu data processing method according to one embodiment of the invention. We will refer to Fig. 1.

101, A dining location identifier sent from a terminal is received, wherein the dining location identifier is read by the terminal from an object tag in a dining location.

In the aforementioned step, the object tag may include a barcode tag, such as a barcode or a two-dimensional barcode, and a electronic tag, such as a RFID (Radio Frequency Identification) tag or a NFC (Near Field Communication) tag, or the object tag may include any other electronic tag to be identified with the radio frequency identification technology. It is not particularly limited in this embodiment.

The so-called barcode tag is a barcode for recording data with a black and white pattern where certain geometric patterns are distributed in a specified direction, for example a one-dimensional or two-dimensional direction, according to certain rules. The barcode tag can be attached to an object or be stored in a terminal in electronic form, so as to identify some information of the object. A reading apparatus can read actual data recorded in a barcode tag by pointing a camera to the barcode tag.

The two-dimensional barcode, also known as two-dimensional code, is a barcode for recording data with a black and white pattern where certain geometric patterns are distributed according to certain rules in a plane (two-dimensional directions), such as the QR code or Hanxin code.

The so-called electronic tag is a data carrier with storage spaces for a user to write actual data. It can be attached to an object for identifying some information of the object. A reading apparatus can read actual data recorded in the electronic tag by being placed proximate to the electronic tag.

102, Corresponding menu data of the dining location identifier is obtained.

103, The menu data is sent to the terminal.

It should be noted that the device for implementation of 101 to 103 may be a processing apparatus located in a server of a network or a distributed system located in a network. It is not particularly limited in this embodiment.

It should be noted that the terminal herein may be any terminal with the capacity to read an object tag.

In this way, through receiving the dining location identifier sent from a terminal wherein the dining location identifier is read by the terminal from an object tag in the dining location, and then obtaining corresponding menu data of the dining location identifier, it is possible to send the menu data to the terminal. Since the menu data in electronic form is used instead of the traditional printed menu, there is no longer the problem of limited number of menus; accordingly, it is possible to avoid the problem in the prior art that, due to shortage of menus, a client can not study a menu and order dishes until a menu is available to him, and thus it is possible to improve the efficiency of dish ordering.

Alternatively, in a possible implementation of the embodiment, at 101, the dining location identifier read by the terminal refers to a unique identifier used to identify the dining location, namely the dining spot and dining position (i.e., a dining table).

In a particular implementation of the process, before 101, the method for generating a unique identifier in the prior art are can be specifically used to generate a series of unique identifiers. For example, the primary key ID recorded in the database can be used as the unique identifier; or, one can do related operations, such as hash operation, on the primary key ID and take the result of the operations as the unique identifier; or, one can also define an incrementing sequence as the unique identifier; and so forth. It is not particularly limited in the embodiment. The generated unique identifier can be numbers and/or letters such as 123, abc, abc123, or the like, it can also be other characters supported in a browser's address bar, for example, ?, or the like. The present embodiment is not particularly limited to the aforementioned.

After generating the unique identifiers, the unique identifiers can be assigned to respective dining positions of the specified dining spot, so as to uniquely identify the dining locations.

In another particular implementation, after each dining position of the specified dining spot is assigned a dining location identifier, one may further perform a storage process on the corresponding relationship between the dining location identifier for each dining location and the menu data for the dining location, as well as the menu data for the dining location.

In particular, the corresponding relationship, between the dining location identifier for a dining location and the menu data for the dining location, as well as the menu data for the dining location, can be stored in a database.

It should be noted that the database can be particularly deployed on any server, for example, it can be deployed on the server of the technical solution of the present invention, or one can set up a server other than the aforementioned server. The present embodiment is not particularly limited to the aforementioned.

In the aforementioned embodiment, the database can be a relational database, for example, Oracle database, DB2 database, Structured Query Language (SQL) server database, MySQL database, etc., or it can be a key-value database, for example, "NOT Only SQL" NoSQL databases, Redis database, etc. It is not particularly limited in this embodiment.

In particular, the menu data can particularly include the information of all dishes and liquor and other information, which the corresponding dining spot offers; or it may further include a marketing strategy, for example, a 30-Yuan lunch coupon for every 100 Yuan. The items included in the menu data can be categorized according to attributes such as drinks, cold dishes, hot dishes, staple foods, to obtain a number of categories. The sequence of items in each category can be fixed. It can also be flexibly adjusted according to the times each item have been selected by customers, for example, the more times an item has been selected by customers, the nearer the item is listed to the front in the category the item belongs to; or, as another example, an item selected most by customers can be listed at the very front as the hottest item of the restaurant to recommend to customers; or , as still another example, in particular, an item ranked highest by customers can be listed at the very front as the hottest item of the restaurant to recommend to customers; and so forth.

In particular, the menu data can be input manually, imported automatically with a program code, etc. The present embodiment is not particularly limited to the aforementioned.

Alternatively, in a possible implementation of the embodiment, at 101, in addition to the dining location identifier, the terminal may further read the server's server identifier from the object tag. In this way, at 101, in particular, it is possible to receive the dining location identifier sent by the terminal according to the server identifier of the server.

In particular, among the content read by the terminal, the server identifier and the dining location identifier can be particularly assembled into a parameter; or the dining location identifier can also be used as a parameter for the server identifier; or, the server identifier and the dining location identifier can also be two independent parameters. It is not particularly limited in this embodiment.

In a particular implementation, the server identifier of the server may include, but are not limited to, the IP address of the server, the Uniform Resource Locator (URL) of the server, or the Uniform Resource Name (URN) of the server; or it may also include other identifying information that can be used to access the server. This embodiment is not particularly limited to the aforementioned.

As an example wherein URL of the server is taken as the server identifier of the server, if the terminal reads, from the terminal tag, a URL "http: // xxxxx / yyyyy", it is obvious the first half of the URL "http: // xxxxx " is the URL of the server, and the second half " yyyyy "is the dining location identifier; if the terminal reads, from the object tag, a URL" http: // xxxxx "and a string of characters" yyyyy ", it is obvious that the URL is the URL of the server, and the string of characters is the dining location identifier.

Alternatively, in a possible implementation of the embodiment, at 102, in particular, it is possible to use the received dining location identifier to carry out a matching among the corresponding relationships between stored dining location identifiers of respective dining locations and menu data of the dining locations, as well as menu data of the dining locations, so as to obtain corresponding menu data of the dining location identifier.

Alternatively, in a possible implementation of the embodiment, at 103, in particular, it is possible to send menu data in a structured form to the terminal.

In this way, the terminal can exhibit structured menu data, which can make key points of the exhibition highlighted and make the content clearer, and thus effectively improves user experience.

Alternatively, in a possible implementation of the embodiment, after 103, it is possible to further obtain dish ordering instructions triggered by a user operating the menu data with the terminal, and then to generate dish ordering data of the terminal according to the dish ordering instructions, and then to carry out an association processing on the dining location identifier and the dish ordering data.

In a particular implementation, the dish ordering instructions may in particular include item identifiers for respective selected items, so as to generate dish ordering data of the terminal according to the item identifiers, and thus to fulfill the end of active dish ordering by the customer.

In another particular implementation, the dish ordering instructions may in particular include the number of diners, so as to generate dish ordering data of the terminal according to the number of diners, and thus to fulfill the end of automatic catering.

In this way, the menu data in electronic form is used instead of a traditional printout, it is therefore possible to do dish ordering based on the menu data, which makes it unnecessary for a waiter to generate a customer's selection of dishes into a dish order and send it to the kitchen, and thus effectively improves the efficiency of dish ordering.

In another particular implementation, because the dining location has the characteristic of being able to be repeatedly used, the association processing conducted in the implementation, in addition to associating the dining location identifier with the menu data of the terminal, needs to further associate the dining location identifier and the dish ordering data of the terminal with a dish order identifier. The dish order identifier is used to uniquely identify a dish order of a dining location, for example, taking day as the unit, consecutive numbers 1,2,3 , ......, and so on, are used for identification.

There may be a number of dish orders for each dining location, but, at a specific time, there can be only one dish order, because, although the dining location has the characteristic of being able to be used repeatedly, it is necessary for the customers at one table to finish the dishes (including a successful payment operation), only after that can the customers of the next group use the table. An unfinished dish order payment indicates an unfinished status of the dish order, a finished dish order payment indicates a finished status of the dish order.

Specifically, it is in particular possible to determine whether the associated dish order identifier is one of an unfinished dish order or a new dish order, based on the current status of the dish order of the dining location. For example, when the dining location's newest dish order is unfinished, the dining location identifier and the dish ordering data of the terminal can be associated with the dish order identifier of the unfinished dish order; when the dining location's newest dish order is finished, the dining location identifier and the dish ordering data of the terminal can be associated with the dish order identifier of another dish order that is newer.

It should be noted that the operation of associating the dining location identifier and the dish ordering data of the terminal with a dish order identifier is not an operation that must be performed. Optionally, the operation of associating the dining location identifier and the dish ordering data of the terminal with a dish order identifier will not be performed. Instead, after a dish order payment is finished, the dish order and the corresponding dish ordering data of the dish order will be processed locally. In this way, the dish ordering data obtained with the dining location identifier will always be the dish ordering data for the customers at the current table.

At the same time, for the sake of subsequent management and statistics, before deleting, the data, i.e. the dish order, as well as the corresponding dish ordering data of the dish order, can be sent to other devices, for storage and processing.

In another particular implementation, after 101, it is also possible to obtain corresponding dish ordering data of the dining location identifier from terminals other than the terminal, and send the dish ordering data from said terminals other than the terminal to the terminal.

In this embodiment, when a group of kids prepare to eat in a dining location, everyone can take out his mobile phone, tablet PC, or any other terminal and read the dining location identifier from the dining location, i.e., the object tag provided on a table at a certain dining spot. And then, each terminal sends the dining location identifier that has been read to the server, and thus corresponding menu data and all dish ordering data of the dining location identifier is obtained. As a matter of fact, this is equivalent to grouping these kids into a sub-group, in which the menu data is shared. In particular, the dish order identifier corresponding to the dining location identifier can be used to identify the sub-group.

In this way, because it is possible to send the dish ordering data from terminals other than the terminal, corresponding to the dining location identifier, to the terminal, the terminal can carry out dish ordering along with said terminals other than the terminal, it is therefore possible to support the situation of multiple customers ordering at the same time.

Alternatively, in a possible implementation of the embodiment, it is possible to further generate the dish order of the dining location based on all dish ordering data corresponding to the dining location identifier, for payment operations.

In particular, it is in particular possible to obtain the corresponding dish order identifier of the dining location identifier based on the dining location identifier, and then obtain all corresponding dish ordering data of the dish order identifier based on the dish order identifier.

In a particular implementation, the terminal can in particular perform network payment operations based on the dish order.

The so-called network payment operation refers to the operation where an electronic transaction party, either consumer, manufacturer, or financial institution, uses secure electronic payment means to perform money payment or cash transferring via network, mainly including electronic money, electronic credit card, and electronic check.

As should be noted, the terminal participating in the network payment operations does not have to be the terminal or said terminals other than the terminal involved in dish ordering, it can be a new terminal, as long as it can read the dining location identifier in an object tag, obtain payment information of a dish order, and perform network payment operation based on the payment information.

In this way, because it is possible to generate the dish order of the dining location based on the dish ordering data corresponding to the dining location identifier, for payment operations, and it is particularly possible to perform network payment operation with the terminal, customers need not go to the cashier of the dining location, which can effectively improve the efficiency of dish ordering.

In another particular implementation, a customer can do an on-site payment operation based on the dish order, for example, he can hold cash or bank card to the cashier and perform payment for the dish order.

Alternatively, in a possible implementation of the embodiment, it is also possible to further demonstrate operable page elements for each item of the menu data, for example, a like-it button, a comment button, a grading button, and the like; a customer can operate these page elements to provide interactive data for specified item. Or, it is also possible to further show operable page elements for related personnel of the dining spot, for example, a like-it button, a comment button, a grading button, and the like; a customer can operate these page elements to provide interactive data regarding specific personnel. In this way, the dining spot can be instructed to do corresponding adjustment based on the interactive data, for example, the dining spot can be instructed to adjust the layout of the dish ordering data of the dining spot, or, for another example, the dining spot can be instructed to adjust the staff of the dining spot, etc.

In this embodiment, through receiving a dining location identifier sent by a terminal wherein the dining location identifier is read by the terminal from the object tag of the dining location, and then obtaining corresponding menu data of the dining location identifier, it is possible to send the menu data to the terminal. Since the menu data in electronic form is used instead of the traditional printed menu, there is no longer the problem of limited number of menus; accordingly, it is possible to avoid the problem in the prior art that, due to shortage of menus, a client can not study a menu and order dishes until a menu is available to him, and thus it is possible to improve the efficiency of dish ordering.

In addition, with the technical solution provided by the invention, after the customer uses the terminal he is using to read the dining location identifier from the object tag of the dining location and sends it to the server, it is possible to obtain corresponding menu data of the dining location identifier, there is no need of specific terminal or installing of a specific application, which increases the efficiency of dish ordering.

In addition, with the technical solution provided by the invention, the menu data in electronic form is used instead of a traditional printout, it is therefore possible to do dish ordering based on the menu data, which makes it unnecessary for a waiter to generate a customer's selection of dishes into a dish order and send it to the kitchen, and thus effectively improves the efficiency of dish ordering.

In addition, with the technical solution provided by the invention, because it is possible to generate the dish order of the dining location based on the dish ordering data corresponding to the dining location identifier, for payment operations, and it is particularly possible to perform network payment operation with the terminal, customers need not go to the cashier of the dining location, which can effectively improve the efficiency of dish ordering.

In addition, with the technical solution provided by the invention, because it is possible to send corresponding dish ordering data of the dining location identifier from terminals other than the terminal to the terminal, the terminal can carry out dish ordering along with said terminals other than the terminal, it is therefore possible to support the situation of multiple customers ordering at the same time.

As should be noted, for each of the aforementioned embodiments of the method, for the sake of simple description, it is described as a combination of a series of actions, those skilled in the art should be aware that the present invention is not limited by the sequence of the described actions, because some steps may adopt other sequences or can be performed simultaneously. Secondly, those skilled in the art will also be aware that the embodiments described in the specification are preferred embodiments, the involved actions and modules are not absolutely necessarily to the invention.

In the above embodiments, the descriptions of the various embodiments have different emphases, some part not described in one certain embodiment can be found in related description of other embodiments.

Fig. 2 is a schematic structure diagram of the menu data processing device according to another embodiment of the invention. We will refer to Fig. 2. The menu data processing device according to the embodiment may comprise: a receiving unit 21, an obtaining unit 22, and a transmission unit 23. The receiving unit 21 is used for receiving a dining location identifier sent by a terminal, the dining location identifier being read from the object tag of the dining location by the terminal. The obtaining unit 22 is used for obtaining corresponding menu data of the dining location identifier. The transmission unit 23 is used for sending the menu data to the terminal.

In the above-identified device, the object tag may include a barcode tag, such as a barcode or two-dimensional barcode, and a electronic tag, such as a RFID (Radio Frequency Identification) tag or a NFC (Near Field Communication) tag, or the object tag my may include any other electronic tag to be identified with the radio frequency identification technology. It is not particularly limited in this embodiment.

It should be noted that the menu data processing device according to another embodiment may be a processing apparatus located in a server in a network or a distributed system located in a network. It is not particularly limited in this embodiment.

It should be noted that the terminal herein may be any terminal with the capacity to read the object tag.

Alternatively, in a possible implementation of the embodiment, the receiving unit 21 can be particularly used to receive the dining location identifier sent by the terminal according to a server identifier of the server, which is read by the terminal from the object tag.

In the above implementation, the server identifier of the server may include, but are not limited to, the IP address of the server, URL of the server, or URN or the server. This embodiment is not particularly limited to the aforementioned.

Alternatively, in a possible implementation of the embodiment, the obtaining unit 22 can be further used to obtain dish ordering instructions triggered by a user operating the menu data with the terminal, generate dish ordering data of the terminal according to the dish ordering instructions, and carry out an association processing on the dining location identifier and the dish ordering data.

Alternatively, in a possible implementation of the embodiment, the obtaining unit 22 can be further used to obtain corresponding dish ordering data of the dining location identifier from terminals other than the terminal; and correspondingly, the transmission unit 23 can be further used to send the dish ordering data from said terminals other than the terminal to the terminal.

Alternatively, in a possible implementation of the embodiment, the obtaining unit 22 can also be further used to generate the dish order of the dining location based on all dish ordering data corresponding to the dining location identifier, for payment operations.

In the above implementation, said payment operation may include, without limitation, on-site payment or network payment operation. It is not particularly limited in the embodiment.

As should be noted, the method in the embodiment shown in Fig. 1 can be implemented by the menu data processing device provided in this embodiment. Detailed description can be found in related description given with references to embodiments corresponding to Fig. 1, which will not be repeated here.

In the embodiment, through receiving the dining location identifier sent from a terminal wherein the dining location identifier is read by the terminal from an object tag in the dining location, and then obtaining corresponding menu data of the dining location identifier with the obtaining unit, it is possible to make the transmission unit to send the menu data to the terminal. Since the menu data in electronic form is used instead of the traditional printed menu, there is no longer the problem of limited number of menus; accordingly, it is possible to avoid the problem in the prior art that, due to shortage of menus, a client can not study a menu and order dishes until a menu is available to him, and thus it is possible to improve the efficiency of dish ordering.

In addition, with the technical solution provided by the invention, after the customer uses the terminal he is using to read the dining location identifier from the object tag of the dining location and sends it to the server, it is possible to obtain corresponding menu data of the dining location identifier, there is no need of specific terminal or installing of a specific application, which increases the efficiency of dish ordering.

In addition, with the technical solution provided by the invention, the menu data in electronic form is used instead of a traditional printout, it is therefore possible to do dish ordering based on the menu data, which makes it unnecessary for a waiter to generate a customer's selection of dishes into a dish order and send it to the kitchen, and thus effectively improves the efficiency of dish ordering.

In addition, with the technical solution provided by the invention, because it is possible to generate the dish order of the dining location based on the dish ordering data corresponding to the dining location identifier, for payment operations, and it is particularly possible to perform network payment operation with the terminal, customers need not go to the cashier of the dining location, which can effectively improve the efficiency of dish ordering.

In addition, with the technical solution provided by the invention, because it is possible to send corresponding dish ordering data of the dining location identifier from terminals other than the terminal to the terminal, the terminal can carry out dish ordering along with said terminals other than the terminal, it is therefore possible to support the situation of multiple customers ordering at the same time.

Those skilled in the art can clearly understand that, for convenience and simplicity of description, the systems, devices and units, and specific working processes described above can be understood with references to the corresponding processes of the above embodiments, whose detailed description will not be repeated here.

As should be understood, in the number of embodiments of the present invention, the disclosed systems, devices and methods can be implemented through other ways. For example, the embodiments of the devices described above are merely illustrative. For example, the division of the units is only a logical functional division, the division may be done in other ways in actual implementations, for example, a plurality of units or components may be combined or be integrated into another system, or some features may be ignored, or not implemented. Additionally, the displayed or discussed coupling or direct coupling or communicating connection between one and another may be indirect coupling or communicating connection through some interface, device, or unit, which can be electrical, mechanical, or of any other forms.

The units described as separate members may be or may not be physically separated, the components shown as units may or may not be a physical units, which can be located in one place, or distributed in a number of network units. One can select some or all of the units to achieve the purpose of the embodiments according to the embodiment of the actual needs.

Further, in the embodiment of the present invention, the functional units in each embodiment may be integrated in a processing unit, or each unit may be a separate physical existence, or two or more units can be integrated in one unit. The integrated units described above can be used both in the form of hardware, or in the form of software plus hardware.

The aforementioned integrated unit implemented in the form of software may be stored in a computer readable storage medium. Said functional units of software are stored in a storage medium, including a number of instructions to instruct a computer device (it may be a personal computer, server, or network equipment, etc.) or processor to perform some steps of the method described in various embodiments of the present invention. The aforementioned storage medium includes: U disk, removable hard disk, read-only memory (ROM), a random access memory (RAM), magnetic disk, or an optical disk medium may store program code.

Finally, as should be noted, the above embodiments are merely provided for describing the technical solutions of the present invention, not intended to limit them; although references to the embodiments of the present invention have been made to describe the details of the present invention, those skilled in the art will appreciate: one can still make changes on the technical solutions described in the various embodiments, or make equivalent replacements to some technical features; and such modifications or replacements do not make the essence of corresponding technical solutions depart from the spirit and scope of embodiments of the present invention.

## Claims

1. A menu data processing method, wherein the method comprises:
receiving a dining location identifier sent from a terminal, the dining location identifier being read by the terminal from an object tag in a dining location;
obtaining corresponding menu data of the dining location identifier;
sending the menu data to the terminal.

2. The method according to claim 1, wherein the step of receiving a dining location identifier sent from a terminal comprises:
receiving the dining location identifier sent by the terminal according to a server identifier of a server, the server identifier of the server being read by the terminal from the object tag.

3. The method according to claim 2, wherein the server identifier of the server is IP address of the server, URL of the server, or URN of the server.

4. The method according to claim 1, wherein the method comprises, after the step of sending the menu data to the terminal, the following:
obtaining dish ordering instructions triggered by a user operating the menu data with the terminal;
generating dish ordering data of the terminal according to the dish ordering instructions; and
carrying out an association processing on the dining location identifier and the dish ordering data of the terminal.

5. The method according to claim 1, wherein the method further comprises, after the step of receiving a dining location identifier sent from a terminal, the following:
obtaining corresponding dish ordering data of the dining location identifier from terminals other than the terminal; and
sending the dish ordering data from said terminals other than the terminal to the terminal.

6. The method according to claim 4 or 5, wherein the method further comprises, after the step of generating dish ordering data of the terminal according to the dish ordering instructions, the following:
generating a dish order of the dining location based on all dish ordering data corresponding to the dining location identifier, for payment operations.

7. The method according to claim 6, wherein the method further comprises:
the terminal performing network payment operation based on the dish order.

8. The method according to claim 1, wherein the object tag is a RFID tag, a NFC tag, or a barcode.

9. A menu data processing device, wherein the device comprises:
a receiving unit, used for receiving a dining location identifier sent by a terminal, the dining location identifier being read by the terminal from a object tag;
an obtaining unit, used for obtaining corresponding menu data of the dining location identifier;
a transmission unit, used for sending the menu data to the terminal.

10. The device according to claim 9, wherein the receiving unit is specifically used for:
receiving the dining location identifier sent by the terminal according to a server identifier of a server, the server identifier of the server being read by the terminal from the object tag.

11. The device according to claim 10, wherein the server identifier of the server is IP address of the server, URL of the server, or URN of the server.

12. The device according to claim 9, wherein the obtaining unit is further used for:
obtaining dish ordering instructions triggered by a user operating the menu data with the terminal;
generating dish ordering data of the terminal according to the dish ordering instructions; and
carrying out an association processing on the dining location identifier and the dish ordering data of the terminal.

13. The device according to claim 9, wherein
the obtaining unit is further used for: obtaining corresponding dish ordering data of the dining location identifier from terminals other than the terminal; and
the transmission unit is further used for: sending the dish ordering data from said terminals other than the terminal to the terminal.

14. The device according to claim 12 or 13, wherein the obtaining unit is further used for:
generating a dish order of the dining location based on all dish ordering data corresponding to the dining location identifier, for payment operations.

15. The device according to claim 14, wherein the payment operations include network payment operations.

16. The device according to claim 9, wherein the object tag is a RFID tag, a NFC tag, or a barcode.

17. An apparatus, comprising:
one or more processors;
a memory;
one or more programs, which are stored in the memory, and execute the following when executed by the one or more processors:
receiving a dining location identifier sent from a terminal, the dining location identifier being read by the terminal from an object tag in a dining location;
obtaining corresponding menu data of the dining location identifier;
sending the menu data to the terminal.

18. A nonvolatile computer storage medium, stored with one or more programs, which, when executed by an apparatus, makes the apparatus to execute the following:
receiving a dining location identifier sent from a terminal, the dining location identifier being read by the terminal from an object tag in a dining location;
obtaining corresponding menu data of the dining location identifier;
sending the menu data to the terminal.
